(19) Europäisches Patentamt / European Patent Office / Office européen des brevets

(11) **EP 3 313 204 B1**

(12) **EUROPEAN PATENT SPECIFICATION**

(45) Date of publication and mention
of the grant of the patent:
**23.03.2022 Bulletin 2022/12**

(21) Application number: **16733367.3**

(22) Date of filing: **21.06.2016**

(51) International Patent Classification (IPC):
*A23L 27/23* (2016.01)     *A23L 27/22* (2016.01)
*A23L 27/10* (2016.01)     *A23L 29/238* (2016.01)
*A23L 27/00* (2016.01)     *A23L 29/212* (2016.01)
*A23L 23/10* (2016.01)     *A23L 23/00* (2016.01)
*A23L 29/30* (2016.01)

(52) Cooperative Patent Classification (CPC):
**A23L 23/10; A23L 23/00; A23L 27/10; A23L 27/22;
A23L 27/23; A23L 27/82; A23L 29/212;
A23L 29/238; A23L 29/30**

(86) International application number:
**PCT/EP2016/064288**

(87) International publication number:
**WO 2016/207149 (29.12.2016 Gazette 2016/52)**

(54) **FOOD CONCENTRATE FOR SOUP, SAUCE OR GRAV**

LEBENSMITTELKONZENTRAT

CONCENTRÉ ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2015 PCT/EP2015/173875**

(43) Date of publication of application:
**02.05.2018 Bulletin 2018/18**

(73) Proprietor: **Unilever IP Holdings B.V.
3013 AL Rotterdam (NL)**

(72) Inventors:
• **CHAPARA, Vishmai
3133 AT Vlaardingen (NL)**
• **SCHUMM, Stephan, Georg
3133 AT Vlaardingen (NL)**

• **SILVA PAES, Sabrina
3133 AT Vlaardingen (NL)**

(74) Representative: **van den Brom, Coenraad Richard
Unilever N.V.
Unilever Patent Group
Bronland 14
6708 WH Wageningen (NL)**

(56) References cited:
**WO-A1-2004/049822     WO-A1-2012/097918
WO-A1-2012/097934     WO-A1-2014/053287**

• **ALVANI ET AL: "Gelatinisation properties of
native and annealed potato starches", STARCH,,
vol. 64, 27 February 2012 (2012-02-27), pages
297-303, XP002761436,**

**Description**

**Field of the invention**

The present invention relates to food concentrates. Food concentrates like soup, gravy and sauce concentrates are food products designed to provide for example ready-to-eat soup, gravy or sauce upon dilution in water and preferably heating.

**Background of the invention**

Starch is widely used in food products as a thickening agent. In the presence of sufficient water and when the temperature is high enough (usually more than 60°C) the starch granules start to swell. This process, also referred to as gelatinisation, is usually characterised by the loss of the crystalline structure (order-disorder transition) that can be observed by several techniques such as X-ray diffraction, Differential Scanning Calorimetry (DSC) (gelatinisation endothermic peak), and microscopy (loss of birefringence and granule swelling).

The native starches (i.e. unmodified) of different botanical sources differ in their appearance (granule form) and functional properties (e.g. pasting, viscosity). Most of the common starches are readily and unequivocally identifiable under a polarizing microscope, using the criteria of granule size and shape, form and positions (centric or eccentric) of the hilum (botanical centre of the granule) and brilliance of the interference cross under polarized light (Snyder,EM. (1984). Chapter XXII - Industrial microscopy of starches. In: Starch: Chemistry and Technology (Second Edition) Food Science and Technology, ed. R.L.W.PASCHALL San Diego: Academic Press, 661-673).. For example, potato starches are characterised by large oval granules, tapioca starch by spherical-truncated granules and corn starch by round granules. Sago starch granules are typically oval shaped with smooth surface and show an off centre hilum. These shapes can be easily observed by light microscopy or scanning electron microscopy. (Method Starc.03-Starch Identification (Microscopy)-B25. Analytical Methods of the Member Companies of the Corn Refiners Association, Inc. 1991) Depending on the botanical source of the starch its thickening properties may differ.

Food technologists working with starches routinely apply two standard methods to analyse the gelatinisation behaviour and thickening properties of starches. The first one is the temperature when the gelatinisation starts: the Tonset (temperature of onset of gelatinisation). The industry standard for measuring Tonset is using Differential Scanning Calorimetry (DSC) (Biliaderis et al. (1980). Starch gelatinisation phenomena studied by differential scanning calorimetry. Journal of Food Science 45, 1669-1674). As water is heated with starch granules, gelatinisation occurs, involving an endothermic reaction. DSC provides a quantitative measure of the heat flow associated with the starch gelatinisation, and the endothermic peaks observed are indicative of melting.

The second standard method measures the increase in viscosity is known in the art as a "pasting" curve. It allows to distinguish - inter alia - starches that thicken relatively fast from so called delayed swelling starches. Pasting curves are routinely measured by a Rapid Visco Analyser (RVA) (Biliaderis,C.G. (2009). Chapter 8 - Structural Transitions and Related Physical Properties of Starch. In: Starch (Third Edition) Food Science and Technology, ed. J.BeMiller and R.Whistler San Diego: Academic Press, 293-372). An RVA is a rotational viscometer that continuously records the viscosity of a sample under conditions of controlled temperature and shear which can be used to measure the increase in viscosity and to provide an assessment of starch 'pasting'.

It has long been known that e.g. the thickening properties of a native starch of a botanical source can be modified chemically or physically. The most common chemical modification processes include acid treatment, cross-linking, oxidation, and substitution, including esterification and etherification. Physical modification methods involve the treatment of native starch granules under e.g. different temperature/moisture combinations, pressure, shear, and irradiation. Physical modification also includes mechanical attrition to alter the physical size of starch granules.

Native and modified starches have been used in sauces, gravies and soups. Many sauces, gravies and soups are sold as food concentrates like sachets of dry powdered sauce, gravy or soup concentrates. To prepare the ready-to-eat product the consumer usually dissolves these concentrates in an aqueous phase and applies a heating step to cook the starch.

In addition to dry concentrates, aqueous concentrates are also known in paste formats. EP 1602289 and WO 2004/04982 disclose the use of a non-gelatinised heat moisture treated potato starch in a shelf stable pasty concentrated composition in the presence of relatively high amounts of sorbitol. However, sorbitol is a not desirable ingredient for a gravy, soup or sauce. But without sorbitol the liquid and fluid product of WO 2004/049822 could not be prepared (see example 5 of this application). In addition, concentrates with non-gelatinised heat moisture treated potato starch were relatively unstable after prolonged storage. WO 2012/097934 avoids the combination of non-gelatinised starch and polyol. Instead WO 2012/097934 discloses gelled concentrates with a salt sensitive gum to provide binding in the ready-to-eat product.

A food concentrate will have a relatively high amount of starch depending on the dilution factor it has been designed for and the desired viscosity of the ready-to-eat product. A food concentrate designed to be diluted 10 times to prepare the ready-to-eat product will have a 10 times higher amount of starch than in the ready-to-eat products. These high amounts of starch in the concentrate may lead to lumping problems when the consumer tries to dilute the concentrates. Starches have been modified to decrease the lumping problem concentrates. For example, WO 2014/053287 and WO 2014/053288 disclose as most preferred starch heat moisture treated (HMT) potato starch for low lumping. It has been reported that using the proper dilution protocol low or even no lumping may be obtained with HMT potato starch. However, some users have reported that aqueous food concentrates with starch still tend to show an undesirable level of lumping.

Although the applicants do not wish to be bound by theory it is hypothesised that this lumping problem may be due to requirements of holding large amounts of non-gelatinised starch in an aqueous format like a paste.

The lump formation may be exacerbated if consumers do not strictly follow the instructions for the dilution of the concentrate. While some starches show decrease in lumping at the same time these starches show little thickening effect in the ready to eat product.

Therefore, it would be desirable to provide a food concentrate with high amounts of starch in the form of paste without the need for sorbitol such that after dilution a sufficient viscosity is obtained in the ready-to-eat product even after prolonged storage of the food concentrate. In addition, it would also be desirable to provide a more robust concentrate which shows a decreased lump formation during hot dilution. To provide such concentrates a more sensitive protocol was developed wherein even native corn starch resulted in undesirable lumping. WO 2014/009079 discloses gelled concentrates with starches with a low gelatinization temperature.

## Summary of the invention

Surprisingly, the present invention provides food concentrates which result in an improved reduction in lump formation combined with the desired viscosity in the end product even after prolonged storage of the food concentrate. Accordingly the present invention provides a food concentrate in the form of a paste comprising

a) 20 to 70 wt% of water by weight of the total food concentrate;
b) 15 to 40 wt% of salt by weight of the total water content of the food concentrate;
c) an effective amount of a taste booster selected from glutamate, 5'-ribonucleotides, sucrose, glucose, fructose, lactic acid, citric acid and mixtures thereof;
d) 10 to 55 wt% by weight of the total food concentrate of a delayed-swelling physically modified non-gelatinised starch characterised by Ref Tonset of at least 70°C;
e) an effective amount of a thickening agent;
f) preferably, less than 5 wt%, preferably less than 3 wt%, more preferably less than 1 wt% of a sorbitol by weight of the total food concentrate and most preferably no sorbitol at all.

The present invention preferably provides a food concentrate in the form of a paste comprising

a) 20 to 70 wt% of water by weight of the total food concentrate;
b) 15 to 40 wt% of salt by weight of the total water content of the food concentrate;
c) an effective amount of a taste booster selected from glutamate, 5'-ribonucleotides, sucrose, glucose, fructose, lactic acid, citric acid and mixtures thereof;
d) 10 to 55 wt% of non-gelatinised annealed sago starch and/or non-gelatinised annealed corn starch by weight of the total food concentrate;
e) an effective amount of a thickening agent;
f) preferably, less than 5 wt%, preferably less than 3 wt%, more preferably less than 1 wt% of a sorbitol by weight of the total food concentrate and most preferably no sorbitol at all.

In addition the present invention provides a process for preparing a concentrate according to the invention, a process for using a concentrate according to the invention to prepare a ready-to-eat product, a ready-to-eat product obtainable by diluting a concentrate according to the invention and the use of concentrate according to the invention to prepare a soup, a sauce or a gravy.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages by weight of the total food concentrate unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

**Detailed description of the invention**

Food concentrate

The food concentrate according to the invention is designed to provide a ready-to-eat product after an appropriate dilution and heating with an aqueous phase such that the starch provides the desired viscosity in the ready-to-eat product. The term dilution in this respect is intended to include dissolving and dispersing as these take place concurrently. The ready-to-eat product is preferably a soup, gravy or a sauce. The sauce may be part of dish like a stew or a risotto. The dilution of a food concentrate according to the invention is usually between 20g/L and 350g/L and more preferably between 50 and 250g/L. The term "food concentrate" and "concentrate" are used interchangeably.

The level of water, salt, starch and other taste ingredients in the food concentrate are determined by the desired level in the ready-to-eat product and the dilution rate. The amount of salt in the food concentrate and intended dilution rate is preferably such that after the dilution the level of salt is preferably at least 0.25 wt%, more preferably at least 0.5 wt%, more preferably at least 0.7 wt% and at preferably at most 2 wt%, more preferably at most 1.7 wt%, more preferably at most 1.3 wt% by weight of the total water content of the ready-to-eat product. The amount of starch in the food concentrate and intended dilution rate is preferably such that after the dilution the amount of starch in the ready-to-eat product is preferably at least 1 wt%, preferably at least 2 wt%, most preferably at most 6 wt%, preferably at most 7 wt% by weight of the total water content of the ready-to-eat product. The total amount of water present in the ready-to-eat product is preferably at least 50 wt%, more preferably at least 65 wt%, more preferably at least 75 wt% and preferably less than 97 wt%, preferably less than 95 wt% preferably less than 90 wt% by weight of the total food concentrate. (Water may be added as such or as part of other ingredients like cream or milk). Details and other preferred ranges of salt, starch, water and other ingredients are described below.

Starch

Surprisingly, it was found that food concentrates according to the invention can be successfully formulated with a specific physically modified non-gelatinised starch. The non-gelatinised starch used in the present invention is usually a delayed-swelling physically modified starch having a Ref $T_{onset}$ of at least 70°C.

Ref $T_{onset}$ measured by Differential Scanning Calorimetry (DSC)

$T_{onset}$ of a given starch is measured by measuring the gelatinisation of starch in a reference DSC-solution. The latter is adjusted to reflect the product application. For example if the product application would be a sweet pudding, the reference DSC-solution will have correspondingly high amounts of sugar. For the present invention the reference DSC-solution (Ref DSC-solution) has a high amount of salt and less sugar: 20.7 wt% NaCl, 12.7wt% sucrose, 66.6% water and the Tonset measured in this reference Ref DSC-solution is referred to the Ref $T_{onset}$.

The preferred physically modified starches show a characteristic increase in Ref Tonset compared to the native starch of the same botanical source. In addition to the Ref Tonset determined in the Ref DSC solution, the Tonset may also be determined in the concentrate (Prod $T_{onset}$). The increase in the Ref Tonset of a physically modified starch like annealed starch can also be found by comparing the Prod Tonset of the physically modified starch to the Prod Tonset of the native starch of the same botanical source, in the same composition.

Delayed-swelling starches as determined by pasting curve

Pasting curves are measured by a Rapid Visco Analyser (RVA) - a rotational viscometer that continuously records the viscosity of a sample under conditions of controlled temperature and shear which can be used to measure the increase in viscosity and provide an assessment of starch 'pasting'. For the purpose of the present invention delayed-swelling starches are defined according the test described in detail below.

The non-gelatinised starch used in the invention is preferably obtained by a physical modification of native starch like annealing and/or heat moisture treatment. The non-gelatinised starch used in the invention is preferably an annealed starch. Annealed starch can be obtained by annealing starch as known in the art e.g. from Tester, R.F. and Debon, S.J.J. Annealing of starch - a review. International Journal of Biological Macromolecules, 27, 1-12. 2000. Briefly, annealing of starch may be described as a physical treatment whereby the starch is incubated in excess water (e.g. >60% w/w) or intermediate water content (e.g. 40 to 55% w/w) at a temperature between the glass transition temperature and the gelatinisation temperature for a certain period of time. After the annealing process, the starch granules remain non-gelatinised. Preferred annealed starches are delayed swelling starches, preferably with a Ref Tonset of at least 70°C, more preferably of at least 74°C, more preferably of at least 76°C, more preferably at least 78°C, most preferably at least 79°C, and preferably at most 100°C, more preferably at most 95 °C.

A delayed swelling physically modified starch according to the invention may be prepared with a process comprising the following steps:

a) Heating a water slurry of non-gelatinised native starch (excess water, preferably with a (w/w) ratio of water: starch of higher than 2:1 more preferably higher than 3:1) to a temperature of from e.g. 55 to 68 °C and kept to this temperature for a period of at least 2h, preferably at least 3h, preferably less than 24h. This step can be performed under mild stirring. The temperature should be maintained below the Tonset of the starch in the aqueous slurry so the starch remains non-gelatinised during the process, as known by a person skilled in the art.
b) Removing the excess water (e.g. by sedimentation and filtering) and drying the starch at a temperature and conditions such that it remains non-gelatinized. (e.g. vacuum dried, T< 60°C)

Optionally the heating step a) can be performed in multiple phases of e.g. increasing temperature to obtain a higher shift in the onset of gelatinization and prevent any unwanted starch gelatinization at the beginning of the process, specially for starches which have a natural lower $T_{onset}$. For example 1h at 60°C followed by one hour at 63°C followed by one hour at 65°C etc.

Optionally, the heating step a) may be carried out in a salt containing solution or another swelling inhibit agent e.g. at least 15% NaCl, preferably at least 20 wt% NaCl by weight of the starch-water slurry whereby the slurry is heated to a temperature of from 60 to 73 °C whereby the remaining conditions are as described above.

Although it is not preferred, the starch may be further modified by any means known in the art.

The non-gelatinised starch in the concentrate of the invention can be isolated from the concentrate by diluting the concentrate in water at a temperature below the gelatinisation temperature of the starch e.g. 50-60 °C. Ref Tonset and delayed swelling of the isolated non-gelatinised starch can be characterised as described herein.

An annealed non-gelatinised starch useful in the invention may also be modified by an additional physically modification like heat moisture treatment. Annealing and physical modification are well known in the art (Stute,R. (1992). Hydrothermal Modification of Starches: The Difference between Annealing and Heat/Moisture -Treatment. Starch/Starke 44, 205-214; Annealing of starch - a review. International Journal of Biological Macromolecules 27, 1-12.)

The non-gelatinised starch used in the invention preferably has an average diameter of more than 10 micrometer, more preferably more than 12 micrometer, more preferably more than 15 micrometer, most preferably more than 18 micrometer. Starch granule size can be measured for example by suspending the non-gelatinised starch granules in water and observing the granule sizes by light microscopy or a particle size analyzer as known by person skilled in the art. Starch granules have sizes ranging from invisible under light microscope to up to more than 100 micrometers. For estimating the average granule size by using light microscopy, for example, images from separate areas each with at least 200 starch granules are randomly recorded. Three images are used to measure starch granules sizes. The starch granules are labelled manually, and the sizes are automatically measured in micrometers by suitable image analysis software. Further details can be found in Snyder,EM. (1984) as cited above.

The non-gelatinised starch used in the invention is preferably from the following botanical source: corn, arrowroot, sago, waxy corn, wheat, tapioca, yam and mixtures thereof. Most preferably the starch is annealed sago starch. Annealed sago starch is well known in the art (Wang,W.J., Powell,A.D., and Oates,C.G. (1997). Effect of annealing on the hydrolysis of sago starch granules. Carbohydrate Polymers 33, 195-202; Jayakody,L. and Hoover,R. (2008). Effect of annealing on the molecular structure and physicochemical properties of starches from different botanical origins: A review. Carbohydrate Polymers 74, 691-703).

The amount of non-gelatinised starch is at least 10 wt%, more preferably at least 12 wt% and 15 wt%, and at most 55 wt% more preferably at most 45 wt%, more preferably at most 40 wt% more preferably at most 35 wt%, most preferably at most 32 wt% by weight of the total concentrate. The amount of starch in the ready-to-eat product is preferably at least 1 wt%, preferably at least 2 wt%, most preferably at most 6 wt%, preferably at most 7 wt%. The food concentrate according to the invention preferably has a w/w ratio of water to non-gelatinised starch (on dry basis) of higher than 0.5, preferably higher than 0.6, preferably higher than 0.8, at most 7, more preferably at most 5. Although starch may contain some water depending on the source, the amounts in the present invention are calculated as the dry matter. The w/w ratio of non-gelatinised starch to salt in the total food concentrate is preferably at least 0.8, even more preferably at least 1, even more preferably at least 1.5, even more preferably at least 2, and more preferably at most 10, more preferably at most 8, most preferably at most 5.

It is understood that the preferred features of the non-gelatinised starch used in the invention as described can be combined, i.e. preferred botanical source with preferred physical modification, preferred Ref Tonset and delayed swelling.

Reduction in lumping

Preferably, the concentrate according to the invention has a reduction in lumping in the test described below of preferably at least 15%, more preferably at least 20%, more preferably at least 30%, more preferably at least 40%, more preferably at least 50% and preferably at most 100% when compared to the same concentrate except that the starch according to invention is replaced by the native starch from the same botanical source. For example: Lumping reduction (in %) = (1- Lumping in composition with annealed sago/ Lumping in composition native sago)*100. Thus, if a concentrate with native sago results in 80% lumping and the same concentrate with annealed sago in 10% lumping, the reduction in lumping is 87.5% ((1-10/80)*100%). A reduction in lumping of x% as described herein may also referred to as a Reduced Lumping Factor (RLF) of-x. Accordingly, the concentrate according to the invention has a RLF of preferably at least -15, more preferably at least -20 more preferably at least -30, more preferably at least -40, more preferably at least -50 and preferably at most -100.

Viscosity of the ready-to-eat product

Preferably the food concentrate according to the invention_provides a ready-to-eat product having viscosity of at least 10 mPa.s, preferably at least 20 mPa.s preferably more preferably at least 30 mPa.s, most preferably at least 50 mPa.s at 60°C. The viscosity is preferably measured as detailed below.

Thickening agent

The food concentrate of the present invention comprises a thickening agent, preferably a thickening agent like gelatinised starch or guar gum. It is understood that the term thickening agent when used in the singular also encompasses the plural and vice versa. The thickening agent is present in an effective amount defined as the amount to obtain the desired viscosity of the food concentrate. Preferably the effective amount of thickening agent in the food concentrate is at least 0.05 wt%, preferably at least 0.1 wt%, more preferably at least 0.3 wt%, more preferably at least 0.5 wt% and preferably less than 30 wt%, more preferably less than 20 wt% more preferably less than 10 wt% of a thickening agent by weight of the total water content of the food concentrate.

Food concentrate in the form of a paste

The present invention relates to a food concentrate. It comprises thickening agent in an effective amount sufficient to obtain the desired viscosity of the food concentrate. In addition to the desired structure, the effective amount is also preferably effective to obtain a food concentrate with a dissolution time as defined below. Without wishing to be bound by theory, applicants believe that the dissolution time as defined herein has the advantage of further reducing lump formation of the inventive food concentrate. When e.g. a high amount of non-gelatinised starch is used and relatively little water, no or only a small amount of thickener may be needed to obtain the desired viscosity and dissolution time.
The food concentrate according to the invention is in the form of a paste. The term paste in the present context means that the viscosity of the food concentrate according to the present invention is less than about. 1500 Pa. s, preferably less than about 1000 Pa. s and more preferably less than about 500 Pa. s at a shear rate comprised between about 1 and 100 s$^{-1}$ at a temperature of 20 °C. The present food concentrate may thus be pourable or spoonable in order to allow easy portioning. Advantageously, if the food concentrate according to the present invention is a paste, the viscosity may be adjusted in order to be displayed in a squeezable packaging such as a squeezable bottle fitted with a re-closable cap, for example. This will enable the product to be packed in jar, bottles, tubes for example.

Water

The food concentrate contains water. In the context of the present invention the total water content in the food concentrate includes both water added as such and water as part of other ingredients like vegetables, unless otherwise indicated. E.g., the amount of water in the examples indicated as ingredient is added as such. The food concentrate comprises preferably at least 20 wt%, preferably at least 25 wt%, preferably at least 30 wt%, preferably at least 35 wt%, preferably at least 38 wt%, preferably at least 40 wt%, more preferably at least 42 wt% and at most 70 wt%, more preferably at most 60 wt%, even more preferably at most 55 wt%, of water based on total weight of the food concentrate. The water content in the food concentrate can be measured by any standard method including drying the food concentrate and comparing the weight before and after drying. Thus, when the amount of salt or thickening agent is expressed by weight of the water content of the food concentrate this includes both water added as such and water of other ingredients in the food concentrate.

Sorbitol

Surprisingly, no sorbitol is needed. Preferably, the food concentrate according to the invention comprises less than 5 wt%, preferably less than 3 wt%, more preferably less than 1 wt%, more preferably less than 0.1 wt% of a sorbitol by weight of the total food concentrate. Most preferably, no sorbitol is present at all. It is understood that the expression "less than" includes 0 wt%.

Salt

The food concentrate comprises at least 15 wt%, and at most 40 wt% of salt, based on the water content of the food concentrate. The water content of the food concentrate combines water added as water and water present in other ingredients of the food concentrate like fresh vegetables. Salt is added to provide a salty taste. The salt preferably comprises NaCl, KCl and mixtures thereof. The high level of salt is predominantly present to provide the desired salty taste impact after dissolution in a relatively high volume. As common in the art, the salt content, preferably NaCl, in this context is calculated as ((amount of salt)/(amount of salt + amount of water))*100%. At a level of higher than 26.5 wt% on water, NaCl starts to crystallise, and the food concentrate might contain some salt crystals. Preferably, the amount of salt in the food concentrate is at least 20 wt%, and preferably at most 35 wt%, more preferably at most 31 wt%, most preferably at most 26.5 wt%, based on the weight of the water content of the food concentrate. Preferably, the amount of NaCl in the food concentrate is at least 15 wt%, preferably at least 20 wt%, and preferably at most 40 wt%, more preferably at most 35 wt%, more preferably at most 31 wt%, most preferably at most 26.5 wt%, based on the weight of the water content of the food concentrate. The salt in the food concentrate is preferably dissolved. The food concentrate according to the invention preferably has a water activity of between 0.60 and 0.95, more preferably of between 0.65 and 0.90 even more preferably between 0.70 and 0.90, even more preferably between 0.72 and 0.85, most preferably between 0.72 and 0.79.

Savoury taste booster

The food concentrate is preferably a savoury food concentrate, for example for preparing a bouillon, a soup, a sauce, a gravy or a seasoned dish. To contribute to the savoury taste, the food concentrate of the present invention further comprises a savoury taste booster selected from the group consisting of glutamate, 5'-ribonucleotides, sucrose, glucose, fructose, lactic acid, citric acid and mixtures thereof. The term savoury taste booster used in the singular may refer to a single compound or a mixture of more than one taste booster compounds. The term "savoury taste booster" is used interchangeably with the term "taste booster". The amount of savoury taste booster present in the food concentrate is present in an effective amount to obtain the desired level in the ready-to-eat product. The effective amount depends on the desired dilution rate and amount in the ready-to-eat product. The amount of savoury taste booster in the concentrate is preferably present in an amount of at most 40 wt%, more preferably of at most 30 wt%, more preferably in an amount at most 25 wt%, most preferably in an amount of at most 15 wt%, and preferably at least 0.1 wt%, more preferably at least 0.5 wt%, more preferably at least 1 wt%, more preferably at least 5 wt%, based on the weight of the total food concentrate. A savoury taste booster as mentioned above may be present in an amount at most 40 wt%, more preferably of at most 30 wt%, more preferably in an amount at most 25 wt%, most preferably in an amount of at most 15 wt%, and preferably at least 0.1 wt%, more preferably at least 0.5 wt%, more preferably at least 1 wt%, more preferably at least 5 wt%, based on the weight of the total food concentrate. It is understood that any savoury taste booster compound can be added as such or as part of more complex food ingredients like yeast extract; hydrolyzed proteins of vegetables-, soy-, fish-, or meat-origin, malt extract, beef flavourings, onion flavouring, liquid or dissolvable extracts or concentrates selected from the group consisting of meat, fish, crustaceans, herbs, fruit, vegetable and mixtures thereof.

A food concentrate in the form of a paste according to the invention preferably comprises

    a) 20 to 70 wt% of water by weight of the total food concentrate;
    b) 15 to 40 wt% of salt by weight of the total water content of the food concentrate;
    c) 1 to 40 wt% by weight of the total food concentrate of a taste booster selected from glutamate, 5'-ribonucleotides, sucrose, glucose, fructose, lactic acid, citric acid and mixtures thereof;
    d) 10 to 55 wt% by weight of the total food concentrate of a delayed-swelling annealed non-gelatinised starch characterised by Ref Tonset of at least 70°C; wherein the non-gelatinised starch is annealed sago starch and/or annealed corn starch;

e) 0.05 to 30 wt% of a thickening agent by weight of the total food concentrate;
f) 0 wt% to less than 5wt% of sorbitol by weight of the total food concentrate;

wherein the food concentrate provides a ready-to-eat product having viscosity of at least 20 mPa.s at 60°C, wherein said ready-to-eat product is a soup, sauce or gravy; wherein the viscosity of the food concentrate is less than about 1500 Pa. s, at a shear rate comprised between about 1 and 100 s-1 at a temperature of 20 °C.

Process of preparing a food concentrate

In a further aspect, the invention relates to a process for preparing the food concentrate according to the invention, the process comprising the steps of:

i) preparing a mixture comprising:

- water,
- the thickening agent,

ii) optionally heating said mixture to dissolve the thickening agent, preferably to higher than 40°C ;
iii) admixing the non-gelatinised starch to the mixture at a temperature which is lower than the Tonset of the non-gelatinised starch, preferably less than 70°C, whereby salt, taste booster and any optional ingredient may be admixed at any one of steps i) to iii);

optionally, filling the mixture of step iii) into a packaging; and
In a first step i), a mixture is provided comprising the thickening agent and at least part of the water. The water may be heated to at least 30°C, preferably at least 40°C to allow better mixing.
In the optional step ii) the mixture of water and the thickening agent may heated to dissolve and/or activate/gelatinise the thickening agent. Some thickening agents do not require heating to dissolve. The temperature depends on the thickening agent used. The temperature is preferably higher than 40°C, more preferably higher than 55 °C, more preferably higher than 65 °C, more preferably higher than 75 °C, most preferably higher than 80 °C, and preferably less than 105 °C, more preferably less than 100 °C, most preferably less than 95 °C. Heating of the mixture of step i) results_in dissolving of the thickening agent and activating it to allow thickening of the food concentrate. Preferably, the heating of step ii) provides pasteurization of the mixture. It may be useful to use high shear mixing at a temperature above the activation temperature of the thickening agent to provide optimal activation of the thickening agent.
In step iii) the mixture is optionally cooled and the non-gelatinised starch is admixed at a temperature which is lower than the Tonset of the non-gelatinised starch, preferably less than 70°C, preferably less than 68 °C, more preferably less than 66 °C, preferably above 40 °C, more preferably above 45 °C, even more preferably above 50°C. This can be suitably done by mixing the non-gelatinised starch into the mixture resulting from step ii), preferably by a mixing device. Applied high shear stress is preferably limited to a minimum, for example, only to guarantee homogeneous starch distribution. However, unnecessary stress to the food concentrate is preferably avoided, especially when starch is added close to the gelling point of the thickening agent. Cooling might be carried out by a cooling device like a tube-in-tube heat exchanger, as known in the art, but might also be suitably done by allowing the mixture to cool in the processing vessel.
Salt, tastebooster and any optional ingredient may be added at step i), ii), or iii). Preferably, all ingredients, except for the starch, are added during step i). Addition of ingredients after step ii) might require a high shear mixing because of a viscosity increase, which may not be preferred.
Optionally, the mixture of step iii) is filled into a packaging.
A package preferably is a package selected from the group consisting of a tub, a cup, a jar, a doy pack and a stick pack. The filling of the package is preferably carried out by pouring the mixture resulting from step iii) into the package. Preferably, the concentrate is a packaged concentrate, whereby the concentrate (excluding the packaging) has weight of at least 10g, preferably at least 20g, preferably less than 1 kg, more preferably less than 50g. Preferably, the concentrate is unit dosed having a weight of at least 10 g and less than 50g.
Use In a further aspect, the invention relates to the use of the food concentrate of the present invention to prepare a soup, a sauce or a gravy. At least part of the concentrate is preferably mixed with a hot aqueous phase and diluted in it. The term "dilution" is used interchangeably with the terms "dissolving" and "dispersing" and encompasses both. If preferred, the concentrate of the present invention can be added to a pan directly with sufficient amount of water. Optionally other ingredients required for the soup, sauce or gravy can be added before or after the concentrate like vegetables and/or meat. However, to calculate the amount of salt and starch in the ready-to-eat product such solid ingredients are excluded because the salt and starch will mainly dissolve in the aqueous phase only. Preferably the aqueous phase has a temperature higher than the dissolution/melting temperature of the thickening agent which is used in the concentrate. Preferably, the temperature of the hot aqueous phase is between 60°C and 95°C, more preferably of between 75 and 90°C. During dilution, but preferably thereafter, the mix of the concentrate of the present invention and the aqueous phase is preferably heated or heating is continued to cook-up the mixture. Continuous heating improves dissolving of the concentrate and induces the viscosity increase as a consequence of gelatinisation of the starch. It might be preferred that the concentrate is first dissolved in the aqueous phase, preferably in water, of a temperature of below 95°C, before cooking up (bringing it to a boil). Cooking up is preferred to achieve the final viscosity. An optimal preparation mode is dependent on the type of thickening agent used, the exchange surface area between the food concentrate and the aqueous liquid, on the gelatinisation temperature of the non-gelatinised starch, and on further starch characteristics of the non-gelatinised starch which is used. However, it is in the art of a skilled artisan to find out what the optimal temperature and heating time is for a specific food concentrate. A preferred cooking time may be between 20 s and 10 min, preferably between 30 s and 8 min, more preferably between 45 s and 5 min, preferably at boiling temperature.

A person of average skill is able to optimize adapt the food concentrate depending on the preferred preparation mode or preparation requirements or the desired application for the consumer. For example a food concentrate for a stew may be simmered for hours.

In a further aspect, the present invention relates to a process to provide a ready-to-eat food product, comprising the steps of:

   a) providing a food concentrate of the present invention,
   b) admixing at least part of the food concentrate to an aqueous phase,
   c) heating the mixture resulting from step b) to a temperature higher than the Ref $T_{onset}$ of the starch used, such as to achieve a viscosity increase of the mixture to result in a ready-to-eat food product, whereby the dilution in step b) is preferably between 20g/L and 350g/L and more preferably between 50 and 250g/L. Preferably the heating step bringing the mixture to boiling temperature as described above.

The present invention also relates to a ready-to-eat food product obtainable by the process as described above.

**Tests**

I Ref $T_{onset}$: Reference temperature of onset of gelatinisation of starch in reference solution

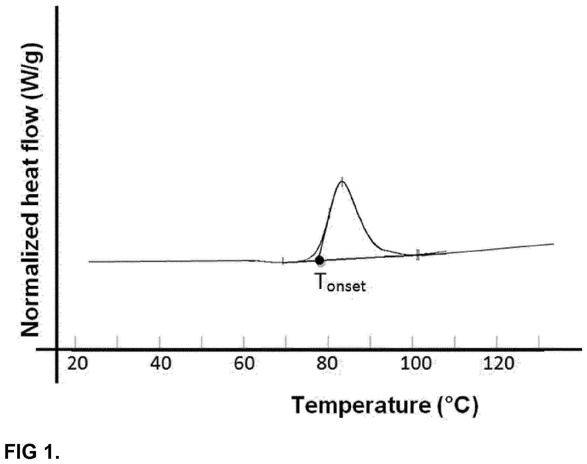

As mentioned above a person skilled in the art of starch routinely uses Differential Scanning Calorimetry (DSC) to measure the Tonset of a given starch sample to evaluate its gelatinisation properties. A typical DSC curve and the $T_{onset}$ according to this procedure is shown in Fig 1 (Temperature vs Normalized heat flow, with endothermic events pointing upwards on the y axis)

The Ref Tonset is the $T_{onset}$ measured in a reference solution, preferably measured using a Differential Scanning Calorimetry (DSC) comprising the steps of:

- preparing a mixture of 12 to 16 mg of starch and 40-50 μL of Ref DSC-solution resulting in a w/w ratio of 1:2.5 to 1:3 in a DSC sample pan (60 μL high pressure stainless steel) whereby the Ref DSC-solution contains 20.7wt% NaCl, 12.7 wt% sucrose and 66.6% water;
- carrying out the DSC measurement protocol comprising the steps of

   1. Holding the mixture for 3 min at 15°C
   2. Heating said mixture from 15°C to 120°C at 10°C/min

- using the standard DSC software to determine the Ref Tonset from the onset of the peak indicating the thermal transition of starch gelatinisation in the DSC thermogram.

The equipment used for the DSC analysis can be any suitable calibrated DSC equipment and is preferably the Perkin Elmer Power Compensated DSC8000 equipped with an intracooler 3 as used herein. Preferably the DSC measurement is performed under nitrogen atmosphere with a gas flow of 20 mL/min.

In addition to the Ref Tonset determined in the Ref DSC solution, the Tonset may also be determined in the concentrate (Prod Tonset). The difference between the Ref Tonset compared for a native and a modified annealed starch of the same botanical origin will be reflected in the Prod $T_{onset}$ of the same two starches in a given formulation.

Therefore, the Prod Tonset is measured in a similar way as the Ref Tonset using a Differential Scanning Calorimetry (DSC) comprising the steps of:

- weighing 35-55 mg of concentrate in a DSC sample pan (60 μL high pressure stainless steel)

- carrying out the DSC measurement protocol comprising the steps of

    1. Holding the mixture for 3 min at 15°C
    2. Heating said mixture from 15°C to 120°C at 10°C/min

- using the standard DSC software to determine the Prod Tonset from the onset of the peak indicating the thermal transition of starch gelatinisation in the DSC thermogram.

II Delayed swelling.

As mentioned above a delayed swelling starch can be determined using a Rapid Visco Analyser (RVA, Newport) with the standard RVA-software to establish a pasting curve as described below. During an RVA analysis, the starch is heated in an aqueous environment following a pre-defined temperature profile. The viscosity changes produced by heating and cooling starch in water generally provide a characteristic curve depending on the starch type and modification.

For the purpose of this invention, a starch is defined as a delayed swelling starch by analysing it using a Rapid Visco Analyser (RVA), whereby the RVA analysis comprises the steps of

    i. Adding a suitable amount of starch to 25g of Ref-RVA Solution, said amount of starch adjusted to provide an increase of viscosity to 180-320cP at time= 7 min (Visc(7)) calculated from the base line viscosity Visc(BL) at time =1 min, whereby the Ref RVA-solution contains 1.3 wt% NaCl, 0.8 wt% sucrose and 97.9 wt% water;
    ii. Carrying out the RVA test under "STD1" conditions as described below or similar;
    iii. Determining the ViscRef defined as Visc (7) - Visc(BL) expressed in centiPoise (cP), whereby the ViscRef is between 180-320cP
    iv. Determining T1 defined as the time necessary to first achieve ViscRef (starting t= 1min) and T2 defined as the time necessary to achieve half of the ViscRef (starting t= 1min)

Whereby the starch is defined as a delayed swelling starch if

    a) T1 is preferably at least 6.5 min, more preferably at least 6.8 min, most preferably at least 7 min; and
    b) T2 is preferably at least 4.6 min, more preferably at least 4.9 min, even more preferably at least 5 min, most preferably at least 5.1 min.

For the present invention the Ref RVA-solution is representative of a typical salt and sugar concentrations in the ready-to eat product.

The RVA standard analysis (STD1) test conditions (available in the standard equipment software package (Thermocline for Windows, TCW. Newport Scientific) can be described as:

| Time h:min:s | Type | Value |
| --- | --- | --- |
| 00:00:00 | Temperature | 50 °C |
| 00:00:00 | Speed | 960 rpm |
| 00:00:10 | Speed | 160 rpm |
| 00:01:00 | Temperature | 50 °C |
| 00:04:42 | Temperature | 95 °C |
| 00:07:12 | Temperature | 95 °C |
| 00:11:00 | Temperature | 50 °C |
| Profile End Time: 00:13:00 | | |
| Profile Idle Temp: 50 °C | | |

The amount of starch to be added to the Ref RVA-solution to achieve ViscRef can be easily adjusted by a person skilled in the art, for example by testing a range of amounts of starch added to the Ref RVA-Solution and obtaining ViscRef between 180-320 cP. The suitable amount of starch for the RVA analysis is preferably 0.8 to 2 g.

Typical ranges of the starch amounts to be tested are:

◦ Sago starch native and modified: 0.9-1.7 g
◦ Tapioca starch native and modified: 0.8-1.4 g
◦ Corn starch native and modified: 1.0-1.8 g

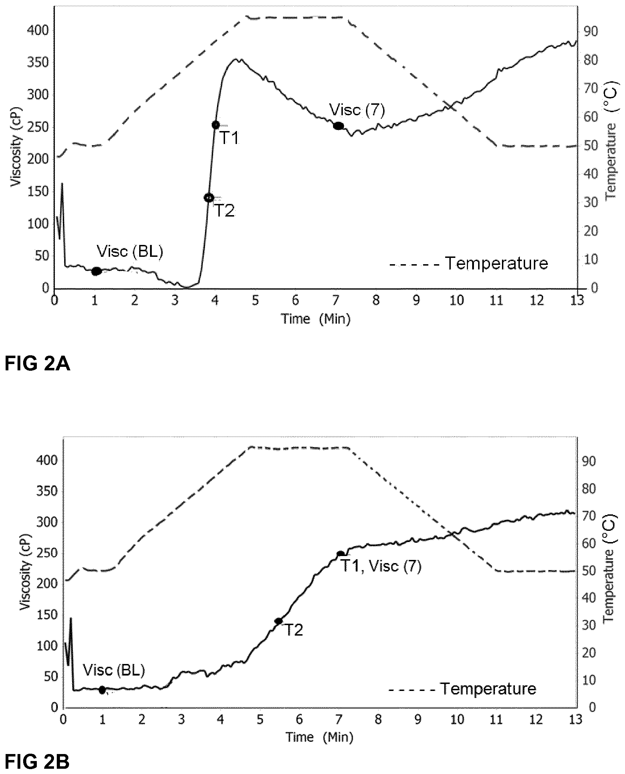

As an example pasting curves are shown in Figure 2 of a native sago starch without delayed swelling (Fig 2A) and a delayed swelling annealed sago starch (Fig 2B):

• Visc (BL)= viscosity at time = 1 min (in cP)
• Visc (7)= viscosity at time = 7 min (in cP)

T1 defined as the time necessary to first achieve ViscRef (starting t= 1min) and T2 defined as the time necessary to achieve half of the ViscRef (starting t= 1min)

The characteristic delayed swelling of the starch can also be measured in the concentrate. For this purpose, a suitable amount of the concentrate (e.g. 3-5g) should be added in 25g of water (diluted) in order to provide a suitable amount of starch (e.g. 0.8-2g) to provide an increase of viscosity of 180-320cP at time= 7 min calculated from the base line viscosity Visc(BL) at time =1 min. The amount of concentrate to be added to 25g of water will depend on the type of starch and amount of starch present in the concentrate and can be easily adjusted by a person skilled in the art, for example by testing a range of amounts of concentrate added to 25g of water. The characteristic delayed swelling of the starch in a food concentrate can be measured using a method comprising the following steps of:

i. Adding a suitable amount of concentrate to 25g of water, said amount of concentrate adjusted to provide an increase of viscosity to 180-320cP at time= 7 min calculated from the base line viscosity Visc(BL) at time =1 min
ii. Carrying out the RVA test under "STD1" conditions as described above or similar;
iii. Determining the ViscRef defined as Visc(7) - Visc(BL) expressed in centiPoise (cP), whereby the ViscRef is between 180-320cP
iv. Determining T1 defined as the time necessary to first achieve ViscRef (starting t= 1min) and T2 defined as the time necessary to achieve half of the ViscRef (starting t= 1min)

Whereby the T1 and T2 are as defined *supra.*

Standardised wet lumping test

For the purpose of the present invention lumping of a concentrate according to the invention is preferably measured in the test below. The chosen test conditions favour the formation of lumps, i.e. adding the gelled concentrate in boiling water and with very mild stirring. This will allow to provide preferred food concentrates according to the invention which are more robust in use, even when consumers deviate from the instructions of use.

• A kitchen food preparation machine (Kenwood Cooking chef major KM070 series or similar), with temperature control with major sized Anchor Flexi beater stirrer attachment or similar.
• Stirrer moves at a stirring speed of ~ 22 rotations per minute
• 25-30 g of food concentrate is added to 250ml of water at 98°C in the Kenwood Mixer
• Stirring is continued for 1 min at 98 °C
• Stirring is stopped and product is maintained for 1 min at 98 °C. Product is sieved and amount undissolved material is weighed (1mm mesh sieve)

The concentrate according to the invention used in this lumping test is without particles of vegetable, meat or herbs or other solid ingredients with a size larger than the mesh (1mm) and that would remain in the sieve.

$$\text{Standardised wet lumping } (\%material\ undissolved) = \frac{weight\ material\ undissolved}{weight\ of\ initial\ concentrate} * 100$$

It is understood that the % of material undissolved can be higher than 100% in cases in which the amount of material retained in the sieve is higher than the initial amount of concentrate (e.g. 25g concentrate is tested and the amount weighed in the sieve is 28 g) . That is because the starch lumps also absorb water during cooking and that would be reflected in the amount retained in the sieve. The preferred non-gelatinised starch used in the invention shows a surprising decrease in lumping compared to the same concentrate with the same amount of native starch of the same botanical source.

Since the lumping test overestimates the lumping, it is expected that in real use including the addition of the concentrate to water at lower temperatures and/or e.g. intensive stirring with a hand whisk, as can be expected from some consumers, would lead to far lower absolute amount of lumps. However, a difference between preferred starches that are part of the invention and native starches of the same botanical source that are not part of the invention would still be observed.

Test Dissolution time

The dissolution time of the concentrate in absence of the non-gelatinised starch is measured by a conductivity measurement. The conductivity is measured according to the following method:

Equipment:

- Conductivity meter with data logging capacity
- Magnetic stirring (and magnetic stirrer) plate with heating function
- 1L glass beaker
- Temperature probe
- Meshed metal grid (4mm) with a support to suspend the grid inside the beaker

    - 500 ml of tap water is heated to boiling temperature and added to 1L glass beaker.
    - The beaker is placed on magnetic stirring plate with heating function. The temperature and conductivity probe are placed in the beaker.
    - A magnetic stirrer (smooth surface 64mm x 10mm) is placed at the bottom of the glass beaker.
    - Test conditions:

        a. The temperature of the heating plate is set so that the temperature can be maintained between 95-100°C throughout the test.
        b. The stirring is started and kept at 300rpm

    - Once the temperature reaches boiling (~98°C), the conductivity measurement is started.
    - 28g of food concentrate is put into the beaker. If the paste is thick enough, the food concentrate may be placed onto a meshed metal grid and the metal grid which holds the food concentrate is then gently immersed in the hot water until it is suspended 3 cm above the bottom of the glass beaker.
    - Stop the test when the value appears to stabilise on the conductivity meter
    - The 90% dissolution time is determined as the time at which 90% of the plateau value for the conductivity is reached (using conductivity curve)
    - Measurements are made in duplicate or triplicate (n = 2 or 3).

Preferably, the concentrate according to the invention has a dissolution time (measured without the non-gelatinised starch) of preferably at most 4 min, more preferably at most 3 min, even more preferably at most 2.8 min, and preferably more than 2 s, preferably more than 5 s, more preferably more than 10 s, even more preferably more than 20s.

Viscosity of the ready-to-eat product

It is desirable that the ready-to-eat product obtained after diluting the food concentrate according to the invention has a certain viscosity. The viscosity of ready-to-eat product is preferably measured as detailed below.

Dilute the concentrate in the required amount of warm water of 60 °C to obtain the ready-to-eat product (e.g. 28g concentrate in 250g water). Stir well and then heat the product for e.g. 1 min at 98°C, assuring that no water evaporates during the preparation. For the measurement of the viscosity of the ready-to-eat product the product is prepared under mild conditions so no lumps are present (i.e. recommended water temperature and suitable stirring). As some starches will take more time to reach full viscosity, the same experiment is repeated with stirring and heating for 5 respectively 10 minutes and the highest viscosity measured is noted.

The viscosity is measured in a Physica MCR rheometer 300, 301 (Anton Paar GmbH, Graz, Austria) or similar, with the following geometry:

- Measuring cup (ridged cylinder): Part number 21736

- Vane: Part number. 21888 ridged cylinder

Method:

1) Equilibration step: Shear rate at 30 s$^{-1}$ at 75°C for 2 min
2) Cooling step: Shear rate at 30 s$^{-1}$ from 75°C to 20°C at 2.04 °C/min If necessary, a solvent trap should be used during the measurement to avoid water evaporation.

The viscosity at 60 °C on cooling is recorded as and expressed in mPa.s. (milli Pascal second)

**Examples**

The invention is further exemplified in the examples below. The physically modified starch according to the invention was supplied by Ingredion Inc. (USA), except for example 3. A savoury flavour mix was used to add savoury taste booster compounds to the concentrates. The amount of NaCl in the savoury flavour mix is in wt% by weight of the savoury flavour mix.

Process to prepare concentrates

The following process was used to prepare the products in the following examples in a Thermomix (Vorwerk, Germany):
Steps

- Add water to the vessel and heat to 50°C

- Start mixing

- Add thickener and allow for hydration

- Add all dry ingredients (except non-gelatinised starch) while mixing

- Heat up to 70°C

- Cool to non-gelatinised starch addition temperature (adapted depending on the starch, e.g. -58 °C for annealed sago and 42°C for HMT potato starch)

- Add the starch and mix for 2 min

- Filling containers for measurement.

**Example 1**. Food concentrate in the form of a paste with a non-gelatinised delayed swelling physically modified starch according to the invention.

| Ingredient | Annealed sago |
|---|---|
|  | (%) |
| Added water# | 30.1 |
| non-gelatinised annealed sago starch (S2) | 31.4 |
| NaCl | 8.3 |
| Sucrose | 13.4 |
| Savoury flavour mix * | 15.7 |

(continued)

| Ingredient | Annealed sago |
|---|---|
| Structuring agent (gelatinised waxy maize) | 1.1 |
| Total | 100.0 |

| Lumping reduction compared to non-gelatinised native sago starch | 76% |
|---|---|
| Viscosity (ready-to-eat product) at 60 °C in mPas (~ 28g in 250ml) fresh | 174 |
| Ratio water/starch(dry basis) | 1.2 |

# total water content of the concentrate- 33%
* Savoury flavour mix (powders): chicken extract, yeast extract, caramel, flavourings, pepper, rosemary. Contains ~ 15.3% NaCl.

Starch characterization

Sago and annealed sago starch were analysed using RVA and DSC as described above. For the RVA analysis respectively 1.2g native sago and 1.2g of annealed sago starch were used.

| Starch | RVA | | | | DSC |
|---|---|---|---|---|---|
| | ViscRef | T1 | T2 | Delayed swelling | $RefT_{onset}$ |
| | (cP) | (min) | (min) | | (°C) |
| Native sago (S1) (Comp) | 210 | 3.9 | 3.8 | No | 77 |
| Annealed sago (S2) | 252 | 7.1 | 5.8 | Yes | 83 |

Example 1 with a non-gelatinised delayed swelling physically modified sago starch according to the invention showed a reduction in lumping of 76% compared to the same composition with native sago starch while the viscosity in the ready-to-eat product was increased by 66%.

Example 2a. Food concentrate with a non-gelatinised delayed swelling physically modified starch according to the invention and thickened with guar gum

| | Annealed sago (S2) | Heat moisture treated potato (S3)(Comp) |
|---|---|---|
| | (%) | (%) |
| Added water# | 30.1 | 28.2 |
| Non-gelatinised starch | 31.8 | 34.1 |
| NaCl | 8.3 | 7.6 |
| Sucrose | 13.6 | 13.8 |
| Savoury flavour mix * | 15.9 | 16.1 |
| Structuring agent (Guar gum) | 0.2 | 0.2 |
| Total | 100 | 100 |

| Viscosity (ready-to-eat product) at 60 °C in mPas (~ 28g in 250ml) fresh | 174 | 180 |
|---|---|---|

(continued)

| Ratio water/starch(dry basis) | 1.2 | 1.2 |
|---|---|---|

# total water content of the concentrate- 33%
* Savoury flavour mix (powders): chicken extract, yeast extract, caramel, flavourings, pepper, rosemary. Contains ~ 15.3% NaCl.

Starch characterization

Sago and annealed sago starches characterization is shown in Example 1. For the RVA analysis respectively 1.2g of heat moisture treated potato starch was used.

| Starch | RVA | | | | DSC |
|---|---|---|---|---|---|
| | ViscRef | T1 | T2 | Delayed swelling | RefT$_{onset}$ |
| | (cP) | (min) | (min) | | (°C) |
| Heat moisture treated potato (S3) (Comp) | 261 | 7.1 | 6.2 | Yes | 63 |

Example 2a with a non-gelatinised delayed-swelling annealed sago starch according to the invention showed a reduction in lumping of 88% compared to the same composition with native sago starch (S1) while the viscosity in the ready-to-eat product was increased by 66%. The lumping of the inventive concentrate was also compared to the comparative example with heat moisture treated potato starch. Also compared to the latter, the inventive concentrate showed 44% lower lumping. In addition the food concentrate with a non-gelatinised delayed-swelling annealed sago starch showed improved retention of viscosity after prolonged storage as shown in example 2b.

**Example 2b**

The storage stability of a concentrate according to the invention with non-gelatinised annealed sago starch was compared to a concentrate of the same composition with non-gelatinised HMT potato starch.

| %wt | Heat moisture treated potato (S3)[Comp] | Annealed sago S2) |
|---|---|---|
| Added water# | 38.47 | 38.47 |
| ungelatinised starch | 30.0 | 30.0 |
| NaCl | 10.0 | 10.0 |
| Sucrose | 8.5 | 8.5 |
| Savoury flavour mix* | 12.6 | 12.6 |
| Guar gum | 0.43 | 0.43 |
| Total (%wt) | 100 | 100 |
| | | |
| Viscosity of the ready-to-eat product after diluting the concentrate at 60°C as described above. | | |
| 0 days storage | 100% | 100% |
| 2 months storage at 20°C | 32% | 82% |
| 2 months accelerated storage (32°C) | 9% | 75% |
| * Savoury flavour mix (powders): Malt Extract, yeast extract, onion flavour, paprika powder, pepper powder, meat flavours. Contains ~ 19.4% NaCl.<br># total water content of the concentrate- 40.7% | | |

The results show that the concentrate according to the invention shows a surprising storage stability compared to a concentrate with HMT potato starch which loses more than 90% of the viscosity in the ready-to-eat product.

### Example 3

A delayed swelling physically modified starch according to the invention was prepared with the following process.

- A water slurry of non-gelatinised native sago starch (excess water, e.g. 4-5% wt starch ) was heated to a temperature of 64°C and kept (incubated) to this temperature for about 2h or about 3h. This step can be performed under mild stirring.
- The excess water was removed (e.g. by sedimentation and filtering) and the starch was dried at temperature and conditions to remain non-gelatinized. (e.g. vacuum dried, T< 60°C)

Starch characterization

An annealed sago starch prepared as above was analysed using RVA and DSC as described above. For the RVA analysis respectively 1.1g annealed sago starch was used.

| | RVA | | | | DSC |
|---|---|---|---|---|---|
| | ViscRef | T1 | T2 | Delayed swelling | $RefT_{onset}$ |
| | (cP) | (min) | (min) | | (°C) |
| Annealed sago (S6) | 235 | 6.9 | 5.1 | Yes | 81 °C |

A gravy concentrate with the annealed sago starch showed low lumping upon dilution and the ready-to-eat product had a good viscosity.

### Example 4

Food concentrate with a non-gelatinised delayed swelling physically modified starch according to the invention (annealed sago starch) was compared to the same composition but with non-gelatinised native corn starch (comparative).

| | Annealed sago (S2) | Native corn starch (Comp) |
|---|---|---|
| | (%) | (%) |
| Added water# | 38.47 | 38.47 |
| Non-gelatinised starch | 30.0 | 30.0 |
| NaCl | 10.0 | 10.0 |
| Sucrose | 8.5 | 8.5 |
| Savoury flavour mix * | 12.6 | 12.6 |
| Structuring agent (Guar gum) | 0.43 | 0.43 |
| Total | 100 | 100 |
| # total water content of the concentrate- 42.5% <br> * Savoury flavour mix (powders): Malt Extract, yeast extract, onion, paprika powder, pepper powder, flavorings. Contains ~ 19.5% NaCl. | | |

The lumping of the inventive concentrate was compared to the comparative example with non-gelatinised native corn starch. Compared to the latter, the inventive concentrate showed a reduction in lumping of 79%. A modified calculation was used to illustrate the reduction in lumping compared to the comparative starch: Lumping reduction (in %) = (1- Lumping in composition with annealed sago/ Lumping in composition with the comparative starch)*100.

Starch characterization

Native tapioca starch, annealed tapioca starch and native waxy corn starch were analysed using RVA and DSC as described above. For the RVA analysis respectively 1.2g native corn, 0.8g of native potato, 1.2g of native tapioca, 1g of annealed tapioca starch and 0.9g of waxy corn starch were used.

| | RVA | | | | DSC |
|---|---|---|---|---|---|
| Comparative Starches | ViscRef | T1 | T2 | Delayed swelling | $RefT_{onset}$ |
| | (cP) | (min) | (min) | | (°C) |
| Native Tapioca | 243 | 4.0 | 3.7 | No | 75 |
| Annealed tapioca (S4) | 225 | 5.3 | 4.4 | No | 83 |
| Native waxy corn (S5) | 262 | 5.0 | 3.8 | No | 73 |
| Native corn | 237 | 5.4 | 4.9 | No | 75 |
| Native potato | 206 | 6.7 | 4.9 | Yes | 61 |

**Example 5 [comparative] sorbitol and non-gelatinised starch**

Example 1 of WO 2004/049822 discloses a liquid fluid thickener composition with 32% non-gelatinised native potato starch and 43.4% sorbitol as shown below. As sorbitol is not acceptable for many consumers, an attempt was made to produce a thickener according to example 1 of WO 2004/049822 but without sorbitol.

| | **Example 1 in** WO004/049822 |
|---|---|
| | (g) |
| Sorbitol | 43.4 |
| Native potato starch | 32.0 |
| Water | 17.9 |
| Kitchen salt | 3.0 |
| Potassium acetate | 3.6 |
| Xanthan | 0.1 |
| | |
| TOTAL | 100 |

Without sorbitol the product could not be processed as the mixing equipment was blocked by the addition of the non-gelatinised starch.

**Claims**

1. A food concentrate in the form of a paste comprising

a) 20 to 70 wt% of water by weight of the total food concentrate;
b) 15 to 40 wt% of salt by weight of the total water content of the food concentrate;
c) an effective amount of a taste booster selected from glutamate, 5'-ribonucleotides, sucrose, glucose, fructose, lactic acid, citric acid and mixtures thereof;
d) 10 to 55 wt% by weight of the total food concentrate of a delayed-swelling physically modified non-gelatinised starch **characterised by** Ref Tonset of at least 70°C;
e) an effective amount of a thickening agent;
f) preferably, less than 5 wt%, preferably less than 3 wt%, more preferably less than 1 wt% of a sorbitol by weight of the total food concentrate and most preferably no sorbitol at all.

2. A food concentrate according to claim 1 wherein the non-gelatinised starch is an annealed starch.

3. A food concentrate according to any one of the preceding claims wherein viscosity of the food concentrate is less than about. 1500 Pa. s, preferably less than about 1000 Pa. s and more preferably less than about 500 Pa. s at a shear rate comprised between about 1 and 100 s-1 at a temperature of 20 °C.

4. A food concentrate according to any one of the preceding claims wherein the non-gelatinised starch is annealed sago starch and/or annealed corn starch.

5. A food concentrate according to any one of the preceding claims wherein the food concentrate at least 0.05 wt%, preferably at least 0.1 wt%, more preferably at least 0.3 wt%, more preferably at least 0.5 wt% and preferably less than 30 wt%, more preferably less than 20 wt% more preferably less than 10 wt% of a thickening agent by weight of the total water content of the food concentrate.

6. A food concentrate according to any one of the preceding claims wherein the food concentrate has a w/w ratio of water to non-gelatinised starch (on dry basis) of higher than 0.5, preferably higher than 0.6, preferably higher than 0.8.

7. A food concentrate according to any one of the preceding claims wherein the food concentrate shows a reduction in lumping in the test described herein of at least 15%, more preferably at least 20%, more preferably at least 30%, more preferably at least 40%, more preferably at least 50% and preferably at most 100% when compared to the same concentrate except that the starch according to invention is replaced by the native starch from the same botanical source.

8. A food concentrate according to any one of the preceding claims wherein the food concentrate provides a ready-to-eat product having viscosity of at least 10 mPa.s, preferably at least 20 mPa.s, more preferably at least 30 mPa.s , most preferably at least 50 mPa.s at 60°C, wherein preferably said ready-to eat product is soup, sauce or gravy.

9. A food concentrate in the form of a paste according to any one of the preceding claims comprising

    a) 20 to 70 wt% of water by weight of the total food concentrate;
    b) 15 to 40 wt% of salt by weight of the total water content of the food concentrate;
    c) 1 to 40 wt% by weight of the total food concentrate of a taste booster selected from glutamate, 5'-ribonucleotides, sucrose, glucose, fructose, lactic acid, citric acid and mixtures thereof;
    d) 10 to 55 wt% by weight of the total food concentrate of a delayed-swelling annealed non-gelatinised starch **characterised by** Ref Tonset of at least 70°C ; wherein the non-gelatinised starch is annealed sago starch and/or annealed corn starch
    e) 0.05 to 30 wt% of a thickening agent by weight of the total food concentrate;
    f) 0 wt% to less than 5wt% of sorbitol by weight of the total food concentrate; wherein the food concentrate provides a ready-to-eat product having viscosity of at least 20 mPa.s at 60°C, wherein said ready-to-eat product is a soup, sauce or gravy; wherein the viscosity of the food concentrate is less than about 1500 Pa. s, at a shear rate comprised between about 1 and 100 s-1 at a temperature of 20 °C.

10. A food concentrate according to any one of the preceding claims having a dissolution time (measured without the non-gelatinised starch) of at most 4 min, more preferably at most 3 min, even more preferably at most 2.8 min.

11. A process for preparing a food concentrate according to any one of the preceding claims, said process comprising the steps of:

    i) preparing a mixture comprising:

        - water,
        - thickening agent,

    ii) optionally heating said mixture to dissolve the thickening agent, preferably to higher than 40 °C;
    iii) admixing the non-gelatinised starch to the mixture at a temperature which is lower than the Tonset of the non-gelatinised starch, preferably of less than 70°C, whereby salt, taste booster and any optional ingredient may be admixed at anyone of steps i) to iii);

optionally, filling the mixture of step iii) into a packaging; and

12. A process according to claim 11 wherein the non-gelatinised starch is admixed at a temperature of preferably less than 70°C, preferably less than 68 °C, more preferably less than 66 °C, preferably above 40 °C, more preferably above 45 °C, even more preferably above 50°C.

13. Use of a food concentrate according to any one of the preceding claims 1 to 10 to prepare a soup, a sauce or a gravy

14. A process to provide a ready-to-eat food product, comprising the steps of:

a) providing a food concentrate according to any one of the preceding claims 1 to 10,
b) admixing at least part of the food concentrate to an aqueous phase,
c) heating the mixture resulting from step b) to a temperature higher than the Ref $T_{onset}$ of the starch used, such as to achieve a viscosity increase of the mixture to result in a ready-to-eat food product, whereby the dilution in step b) is preferably between 20g/L and 350g/L and more preferably between 50 and 250g/L.

15. A ready-to-eat food product obtainable by the process according to claim 14.


**Patentansprüche**

1. Nahrungsmittelkonzentrat in Form einer Paste, umfassend

a) 20 bis 70 Gew.-% Wasser, bezogen auf das Gewicht des gesamten Nahrungsmittelkonzentrats;
b) 15 bis 40 Gew.-% Salz, bezogen auf das Gewicht des gesamten Wassergehalts des Nahrungsmittelkonzentrats;
c) eine wirksame Menge eines Geschmacksverstärkers, ausgewählt aus Glutamat, 5'-Ribonucleotiden, Saccharose, Glucose, Fructose, Milchsäure, Citronensäure und Mischungen davon;
d) 10 bis 55 Gew.-%, bezogen auf das Gewicht des gesamten Nahrungsmittelkonzentrats, einer verzögert quellenden, physikalisch modifizierten, nicht verkleisterten Stärke, die **gekennzeichnet ist durch** Ref $T_{onset}$ von mindestens 70 °C;
e) eine wirksame Menge eines Verdickungsmittels;
f) bevorzugt weniger als 5 Gew.-%, bevorzugt weniger als 3 Gew.-%, bevorzugter weniger als 1 Gew.-%, eines Sorbits, bezogen auf das Gewicht des gesamten Nahrungsmittelkonzentrats, und am meisten bevorzugt überhaupt kein Sorbit.

2. Nahrungsmittelkonzentrat nach Anspruch 1, wobei die nicht verkleisterte Stärke eine thermisch behandelte Stärke ist.

3. Nahrungsmittelkonzentrat nach irgendeinem der vorhergehenden Ansprüche, wobei die Viskosität des Nahrungsmittelkonzentrats weniger als etwa 1500 Pa.s, bevorzugt weniger als etwa 1000 Pa.s und bevorzugter weniger als etwa 500 Pa.s bei einer Schergeschwindigkeit zwischen etwa 1 und 100 s-1 bei einer Temperatur von 20 °C beträgt.

4. Nahrungsmittelkonzentrat nach irgendeinem der vorhergehenden Ansprüche, wobei die nicht verkleisterte Stärke thermisch behandelte Sagostärke und/oder thermisch behandelte Maisstärke ist.

5. Nahrungsmittelkonzentrat nach irgendeinem der vorhergehenden Ansprüche, wobei das Nahrungsmittelkonzentrat mindestens 0,05 Gew.-%, bevorzugt mindestens 0,1 Gew.-%, bevorzugter mindestens 0,3 Gew.-%, bevorzugter mindestens 0,5 Gew.-% und bevorzugt weniger als 30 Gew.-%, bevorzugter weniger als 20 Gew.-%, bevorzugter weniger als 10 Gew.-%, eines Verdickungsmittels, bezogen auf das Gewicht des gesamten Wassergehalts des Nahrungsmittelkonzentrats, enthält.

6. Nahrungsmittelkonzentrat nach irgendeinem der vorhergehenden Ansprüche, wobei das Nahrungsmittelkonzentrat ein Gew./Gew.-Verhältnis von Wasser zu nicht verkleisterter Stärke (auf Trockenbasis) von mehr als 0,5, bevorzugt mehr als 0,6, bevorzugt mehr als 0,8, aufweist.

7. Nahrungsmittelkonzentrat nach irgendeinem der vorhergehenden Ansprüche, wobei das Nahrungsmittelkonzentrat in dem hierin beschriebenen Test eine Verringerung der Klumpenbildung von mindestens 15%, bevorzugter mindestens 20%, bevorzugter mindestens 30%, bevorzugter mindestens 40%, bevorzugter mindestens 50% und bevorzugt höchstens 100% im Vergleich zum gleichen Konzentrat, außer dass die Stärke gemäß der Erfindung durch die native Stärke aus der gleichen botanischen Quelle ersetzt wird, zeigt.

8. Nahrungsmittelkonzentrat nach irgendeinem der vorhergehenden Ansprüche, wobei das Nahrungsmittelkonzentrat ein verzehrfertiges Produkt mit einer Viskosität von mindestens 10 mPa.s, bevorzugt mindestens 20 mPa.s, bevorzugter mindestens 30 mPa.s, am meisten bevorzugt mindestens 50 mPa.s, bei 60 °C bereitstellt, wobei das verzehrfertige Produkt bevorzugt Suppe, Soße oder Bratensoße ist.

9. Nahrungsmittelkonzentrat in Form einer Paste nach irgendeinem der vorhergehenden Ansprüche, umfassend

   a) 20 bis 70 Gew.-% Wasser, bezogen auf das Gewicht des gesamten Nahrungsmittelkonzentrats;
   b) 15 bis 40 Gew.-% Salz, bezogen auf das Gewicht des gesamten Wassergehalts des Nahrungsmittelkonzentrats;
   c) 1 bis 40 Gew.-%, bezogen auf das Gewicht des gesamten Nahrungsmittelkonzentrats, eines Geschmacksverstärkers ausgewählt aus Glutamat, 5'-Ribonucleotiden, Saccharose, Glucose, Fructose, Milchsäure, Citronensäure und Mischungen davon;
   d) 10 bis 55 Gew.-% , bezogen auf das Gewicht des gesamten Nahrungsmittelkonzentrats, einer verzögert quellenden, thermisch behandelten, nicht verkleisterten Stärke, die **gekennzeichnet ist durch** Ref $T_{onset}$ von mindestens 70 °C; wobei die nicht verkleisterte Stärke thermisch behandelte Sagostärke und/oder thermisch behandelte Maisstärke ist;
   e) 0,05 bis 30 Gew.-% eines Verdickungsmittels, bezogen auf das Gewicht des gesamten Nahrungsmittelkonzentrats;
   f) 0 Gew.-% bis weniger als 5 Gew.-% Sorbit, bezogen auf das Gewicht des gesamten Nahrungsmittelkonzentrats; wobei das Nahrungsmittelkonzentrat ein verzehrfertiges Produkt mit einer Viskosität von mindestens 20 mPa.s bei 60 °C bereitstellt, wobei das verzehrfertige Produkt eine Suppe, Soße oder Bratensoße ist; wobei die Viskosität des Nahrungsmittelkonzentrats weniger als etwa 1500 Pa.s beträgt, bei einer Schergeschwindigkeit zwischen etwa 1 und 100 s-1 bei einer Temperatur von 20 °C.

10. Nahrungsmittelkonzentrat nach irgendeinem der vorhergehenden Ansprüche mit einer Auflösungsdauer (gemessen ohne die nicht verkleisterte Stärke) von höchstens 4 min, bevorzugter höchstens 3 min, noch bevorzugter höchstens 2,8 min.

11. Verfahren zur Herstellung eines Nahrungsmittelkonzentrats nach irgendeinem der vorhergehenden Ansprüche, wobei das Verfahren die folgenden Schritte umfasst:

   i) Herstellen einer Mischung, umfassend:

      - Wasser,
      - Verdickungsmittel,

   ii) gegebenenfalls Erhitzen der Mischung, um das Verdickungsmittel zu lösen, bevorzugt auf mehr als 40 °C;
   iii) Vermischen der nicht verkleisterten Stärke zu der Mischung bei einer Temperatur, die niedriger ist als die Tonset der nicht verkleisterten Stärke, bevorzugt von weniger als 70 °C, wobei Salz, Geschmacksverstärker und jeder optionale Inhaltsstoff zu jedem beliebigen von Schritt i) bis iii) zugemischt werden können; gegebenenfalls Füllen der Mischung aus Schritt iii) in eine Verpackung.

12. Verfahren nach Anspruch 11, wobei die nicht verkleisterte Stärke bei einer Temperatur von bevorzugt weniger als 70 °C, bevorzugt weniger als 68 °C, bevorzugter weniger als 66 °C, bevorzugt über 40 °C, bevorzugter über 45 °C, noch bevorzugter über 50 °C, zugemischt wird.

13. Verwendung eines Nahrungsmittelkonzentrats nach irgendeinem der vorhergehenden Ansprüche 1 bis 10 zur Zubereitung einer Suppe, einer Soße oder einer Bratensoße.

14. Verfahren zur Bereitstellung eines verzehrfertigen Nahrungsmittelprodukts, umfassend die Schritte:

   a) Bereitstellen eines Nahrungskonzentrats nach irgendeinem der vorhergehenden Ansprüche 1 bis 10,
   b) Zumischen mindestens eines Teils des Nahrungsmittelkonzentrats zu einer wässrigen Phase,
   c) Erhitzen der sich aus Schritt b) ergebenden Mischung auf eine Temperatur, die höher ist als die Ref $T_{onset}$

der verwendeten Stärke, um eine Viskositätserhöhung der Mischung zu erreichen, um ein verzehrfertiges Nahrungsmittelprodukt zu ergeben, wobei die Verdünnung in Schritt b) bevorzugt zwischen 20 g/L und 350 g/L und bevorzugter zwischen 50 und 250 g/L liegt.

**15.** Verzehrfertiges Nahrungsmittelprodukt, erhältlich durch das Verfahren nach Anspruch 14.

**Revendications**

**1.** Concentré alimentaire dans la forme d'une pâte comprenant

a) 20 à 70 % en masse d'eau en masse du concentré alimentaire total ;
b) 15 à 40 % en masse de sel en masse de la teneur totale en eau du concentré alimentaire ;
c) une quantité efficace d'un exhausteur de goût choisi parmi du glutamate, 5'-ribonucléotides, saccharose, glucose, fructose, acide lactique, acide citrique et mélanges de ceux-ci ;
d) 10 à 55 % en masse en masse du concentré alimentaire total d'un amidon non-gélatinisé physiquement modifié à gonflement retardé **caractérisé par** $T_{début}$ Ref d'au moins 70°C ;
e) une quantité efficace d'un agent épaississant ;
f) de préférence, moins de 5 % en masse, de préférence moins de 3 % en masse, encore mieux moins de 1 % en masse d'un sorbitol en masse du concentré alimentaire total et bien mieux encore pas de sorbitol du tout.

**2.** Concentré alimentaire selon la revendication 1, dans lequel l'amidon non-gélatinisé est un amidon recuit.

**3.** Concentré alimentaire selon l'une quelconque des revendications précédentes, dans lequel la viscosité du concentré alimentaire est inférieure à environ 1 500 Pa.s, de préférence inférieure à environ 1 000 Pa.s et encore mieux inférieure à environ 500 Pa.s à une vitesse de cisaillement comprise entre environ 1 et 100 s$^{-1}$ à une température de 20°C.

**4.** Concentré alimentaire selon l'une quelconque des revendications précédentes, dans lequel l'amidon non-gélatinisé est de l'amidon de sagou recuit et/ou de l'amidon de maïs recuit.

**5.** Concentré alimentaire selon l'une quelconque des revendications précédentes, dans lequel le concentré alimentaire comprend au moins 0,05 % en masse, de préférence au moins 0,1 % en masse, encore mieux au moins 0,3 % en masse, bien mieux encore au moins 0,5 % en masse et de préférence moins de 30 % en masse, encore mieux moins de 20 % en masse, bien mieux encore moins de 10 % en masse d'un agent épaississant en masse de la teneur totale en eau du concentré alimentaire.

**6.** Concentré alimentaire selon l'une quelconque des revendications précédentes, dans lequel le concentré alimentaire présente un rapport masse/masse d'eau à amidon non-gélatinisé (sur une base sèche) supérieur à 0,5, de préférence supérieur à 0,6, encore mieux supérieur à 0,8.

**7.** Concentré alimentaire selon l'une quelconque des revendications précédentes, dans lequel le concentré alimentaire présente une réduction de formation de grumeaux dans le test décrit ici d'au moins 15 %, de préférence d'au moins 20 %, encore mieux d'au moins 30 %, bien mieux encore d'au moins 40 %, particulièrement de préférence d'au moins 50 % et de préférence d'au plus 100 % lorsque comparé au même concentré à l'exception que l'amidon selon l'invention est remplacé par l'amidon natif de la même source botanique.

**8.** Concentré alimentaire selon l'une quelconque des revendications précédentes, dans lequel le concentré alimentaire fournit un produit prêt à être consommé ayant une viscosité d'au moins 10 mPa.s, de préférence d'au moins 20 mPa.s, encore mieux d'au moins 30 mPa.s, bien mieux encore d'au moins 50 mPa.s à 60°C, dans lequel de préférence ledit produit prêt à être consommé est une soupe, sauce ou un jus de viande.

**9.** Concentré alimentaire dans la forme d'une pâte selon l'une quelconque des revendications précédentes comprenant

a) 20 à 70 % en masse d'eau en masse du concentré alimentaire total ;
b) 15 à 40 % en masse de sel en masse de la teneur totale en eau du concentré alimentaire ;
c) 1 à 40 % en masse du concentré alimentaire total d'un exhausteur de goût choisi parmi du glutamate, 5'-ribonucléotides, saccharose, glucose, fructose, acide lactique, acide citrique et mélanges de ceux-ci ;

d) 10 à 55 % en masse en masse du concentré alimentaire total d'un amidon non-gélatinisé recuit à gonflement retardé **caractérisé par** $T_{début}$ Ref d'au moins 70°C ; dans lequel l'amidon non-gélatinisé est de l'amidon de sagou recuit et/ou de l'amidon de maïs recuit
e) 0,05 à 30 % en masse d'un agent épaississant en masse du concentré alimentaire total ;
f) 0 % en masse à moins de 5 % en masse de sorbitol en masse du concentré alimentaire total ;

dans lequel le concentré alimentaire fournit un produit prêt à être consommé ayant une viscosité d'au moins 20 mPa.s à 60°C, dans lequel ledit produit prêt à être consommé est une soupe, sauce ou un jus de viande ; dans lequel la viscosité du concentré alimentaire est inférieure à environ 1 500 Pa.s, à une vitesse de cisaillement comprise entre environ 1 et 100 s$^{-1}$ à une température de 20°C.

10. Concentré alimentaire selon l'une quelconque des revendications précédentes ayant une durée de dissolution (mesurée sans l'amidon non-gélatinisé) d'au plus 4 min, encore mieux d'au plus 3 min, bien mieux encore d'au plus 2,8 min.

11. Procédé de préparation d'un concentré alimentaire selon l'une quelconque des revendications précédentes, ledit procédé comprenant les étapes de :

i) préparation d'un mélange comprenant :

- de l'eau,
- un agent épaississant,

ii) chauffage éventuel dudit mélange pour dissoudre l'agent épaississant, de préférence à plus de 40°C ;
iii) mélange de l'amidon non-gélatinisé au mélange à une température qui est inférieure à la $T_{début}$ de l'amidon non-gélatinisé, de préférence inférieure à 70°C, sur quoi du sel, un exhausteur de goût et tout ingrédient éventuel peut être mélangé à l'une quelconque des étapes i) à iii) ;

éventuellement, charge du mélange de l'étape iii) dans un emballage ; et

12. Procédé selon la revendication 11, dans lequel l'amidon non-gélatinisé est mélangé à une température de préférence inférieure à 70°C, de préférence inférieure à 68°C, encore mieux inférieure à 66°C, de préférence supérieure à 40°C, encore mieux supérieure à 45°C, bien mieux encore supérieure à 50°C.

13. Utilisation d'un concentré alimentaire selon l'une quelconque des revendications 1 à 10 précédentes pour préparer une soupe, une sauce ou un jus de viande.

14. Procédé pour fournir un produit alimentaire prêt à être consommé, comprenant les étapes de :

a) fourniture d'un concentré alimentaire selon l'une quelconque des revendications 1 à 10 précédentes,
b) mélange d'au moins une partie du concentré alimentaire à une phase aqueuse,
c) chauffage du mélange résultant de l'étape b) à une température supérieure à la $T_{début}$ Ref de l'amidon utilisé, afin de réaliser une augmentation de viscosité du mélange pour résulter en un produit alimentaire prêt à être consommé, sur quoi la dilution dans l'étape b) est de préférence de 20 g/L à 350 g/L et encore mieux de 50 à 250 g/L.

15. Produit alimentaire prêt à être consommé pouvant être obtenu par le procédé selon la revendication 14.

FIG 1.

**FIG 2A**

**FIG 2B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1602289 A
- WO 200404982 A
- WO 2004049822 A
- WO 2012097934 A
- WO 2014053287 A
- WO 2014053288 A
- WO 2014009079 A
- WO 004049822 A

**Non-patent literature cited in the description**

- Industrial microscopy of starches. **SNYDER,EM.** Starch: Chemistry and Technology (Second Edition) Food Science and Technology. Academic Press, 1984, 661-673
- **BILIADERIS et al.** Starch gelatinisation phenomena studied by differential scanning calorimetry. *Journal of Food Science,* 1980, vol. 45, 1669-1674
- Structural Transitions and Related Physical Properties of Starch. **BILIADERIS,C.G.** Starch (Third Edition) Food Science and Technology. Academic Press, 2009, 293-372
- **TESTER, R.F. ; DEBON, S.J.J.** *Annealing of starch - a review. International Journal of Biological Macromolecules,* 2000, vol. 27, 1-12
- **STUTE,R.** Hydrothermal Modification of Starches: The Difference between Annealing and Heat/Moisture -Treatment. *Starch/Starke,* 1992, vol. 44, 205-214
- Annealing of starch - a review. *International Journal of Biological Macromolecules,* vol. 27, 1-12
- **WANG,W.J. ; POWELL,A.D. ; OATES,C.G.** Effect of annealing on the hydrolysis of sago starch granules. *Carbohydrate Polymers,* 1997, vol. 33, 195-202
- **JAYAKODY,L. ; HOOVER,R.** Effect of annealing on the molecular structure and physicochemical properties of starches from different botanical origins: A review. *Carbohydrate Polymers,* 2008, vol. 74, 691-703